(19)

Europäisches
Patentamt

European
Patent Office

Office européen
des brevets

(11) **EP 3 734 615 B1**

(12) **EUROPEAN PATENT SPECIFICATION**

(45) Date of publication and mention
of the grant of the patent:
**09.10.2024   Bulletin 2024/41**

(21) Application number: **17936909.5**

(22) Date of filing: **29.12.2017**

(51) International Patent Classification (IPC):
*G21C 19/42* *(2006.01)*     *C01G 43/08* *(2006.01)*
*C22B 17/02* *(2006.01)*     *G21C 19/48* *(2006.01)*
*C22B 60/02* *(2006.01)*

(52) Cooperative Patent Classification (CPC):
**C22B 60/0213; C01G 43/08; C22B 17/02;
G21C 19/42; G21C 19/48**

(86) International application number:
**PCT/RU2017/001020**

(87) International publication number:
**WO 2019/132710 (04.07.2019 Gazette 2019/27)**

(54) **METHOD FOR REPROCESSING NITRIDE SPENT NUCLEAR FUEL IN MOLTEN SALTS**

VERFAHREN ZUR AUFARBEITUNG VON VERBRAUCHTEM KERNBRENNSTOFF IN
GESCHMOLZENEN SALZEN

PROCÉDÉ DE RETRAITEMENT DE COMBUSTIBLE NUCLÉAIRE IRRADIÉ DANS DES BAINS DE
FUSION DE SEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.11.2020   Bulletin 2020/45**

(73) Proprietor: **State Atomic Energy Corporation
"Rosatom"
on Behalf of The Russian Federation
Moscow, 119017 (RU)**

(72) Inventors:
  • **ZAJKOV, Yurij Pavlovich
    Ekaterinburg, Sverdlovskaya obl., 620075 (RU)**
  • **SHISHKIN, Vladimir Yurevich
    Ekaterinburg, Sverdlovskaya obl., 620049 (RU)**
  • **KOVROV, Vadim Anatolevich
    Ekaterinburg, Sverdlovskaya obl., 620016 (RU)**
  • **POTAPOV, Aleksej Mikhajlovich
    Ekaterinburg, Sverdlovskaya  obl., 620137 (RU)**
  • **SUZDALTSEV, Andrej Viktorovich
    Ekaterinburg, Sverdlovskaya obl., 620016 (RU)**
  • **SUKHANOV, Leonid Petrovich
    Moscow, 123103 (RU)**
  • **GERASIMENKO, Maksim Nikolaevich
    Tomsk, Tomskaya obl.,  634057 (RU)**
  • **ZHITKOV, Aleksandr Sergeevich
    Seversk, Tomskaya obl.,  636037 (RU)**

(74) Representative: **Friese Goeden Patentanwälte
PartGmbB
Widenmayerstraße 49
80538 München (DE)**

(56) References cited:
    **FR-A1- 2 750 242      JP-A- 2000 284 090
    JP-A- 2000 284 090     RU-C2- 2 371 792
    US-B1- 9 428 401**

EP 3 734 615 B1

**Description**

Method of reprocessing nitride spent nuclear fuel in salt melts

The invention relates to nuclear power engineering, in particular, to methods of reprocessing spent nuclear fuel (SNF), and can be used in the spent nuclear fuel reprocessing technology in the operation of a closed nuclear fuel cycle, extracted from heat-emitting elements.

The most important task of modern nuclear power engineering is to create a closed nuclear fuel cycle (CNFC) for reactors with fast neutrons. A CNFC makes it possible to considerably increase the energy efficiency of operating technologies of the production of nuclear energy, to reduce the consumption of natural resources, to maximally reduce the volumes of radioactive wastes (RW), and accordingly, to level out problems associated with transportation, storage or reprocessing of such wastes.

At present, nuclear energy is preferably produced using an oxide or metal fuel (Olander D., Theoretical foundations of heat-emitting elements of nuclear reactors, M., 1982), the reprocessing of which by existing methods implies a preliminary extended storage (3-7 years) of heat-releasing elements (fuel elements). Further reprocessing is carried out by methods of water chemistry. A disadvantage of such technique is a very large amount of liquid radioactive waste (radioactive water).

The greatest prospects for the creation of a CNFC are related to the reprocessing of the relatively shortly stored SNFs in molten salts. In particular, this relates to a nitride fuel which can be fed to the reprocessing stage practically immediately after its recovery from the reactor, *inter alia* thanks to the greater degree of its burn-out in the reactor (RU2524681C2, publ. 10.08.2014). Existing hydro-chemical methods of reprocessing SNF cannot be used for reprocessing shortly stored SNF, to which nitride SNF belongs. This has to do with the evolution of a large amount of energy what will result in an evaporation of radioactive water. There is known a method of reprocessing nitride SFW by chlorination, consisting in an anodic dissolution of its electrically conducting components at the electrolysis of a chloride melt (RU2079909, publ. 20.05.1997). This known method is carried out in the temperature range of 450 to 700°C at an anode current density to 0.3 A/cm and a cathode current density up to 0. 4 A/cm wherein nitride SNF is used as anode and a low-melting alloy or metal, for example cadmium, as cathode, which are immersed in a chloride melt in an apparatus representing an electrolyzer for the chlorination of nitride SNF. During the anodic dissolution of the components of the nitride fuel (for example, the nitrides UN and PuN), nitrogen gas is released and the actinides are dissolved in the chloride melt (e.g. in the form of the chlorides $UCl_3$ and $PuCl_3$). The latter are sources for the electrowinning of uranium and plutonium on the cathode.

The advantages of the method are the stability of the chloride melts, more precisely, the stability of their physico-chemical properties, under the influence of radiation irradiation, as well as the possibility of a selection of the parameters of the electrolysis in order to achieve a high separation factor of the components of the nitride SNF returned to the fuel cycle.

The disadvantage of this method is related to the formation of compounds UO ^ $Cl_y$ and UNCl at the anode polarisation of nitride SNF in the chloride melt (Journal of Nuclear Materials 344 (2005), 128-135). The formation of these compounds prevents a complete anodic dissolution of the nitride SNF in the chloride melt and results in additional steps of a filtration and a hydrochemical dissolution of unreacted SNF, limiting the completeness of fuel conversion.

JP 2000 284090 discloses the chlorination of nitride spent nuclear fuel with gaseous chlorine.

FR 2 750 242 discloses the reprocessing of nitride spent nuclear fuel in chloride salt melts at a temperature of 500°C.

The closest to the claimed method is the method of reprocessing nitride spent nuclear fuel in salt melts (RU2603844, publ. 10.12.2016). Said method includes a chlorination of fuel, consisting in its continuous anodic dissolution followed by an electrochemical reduction at a liquid metal cathode in a chloride melt of LiCl-KCl-$CdCl_2$ at a temperature not higher than 500°C. The method is carried out in an inert gas atmosphere in an apparatus for the chlorination of nitride SNF, representing an electrolyzer. In this the presence in the melt of up to 5 mass % $CdCl_2$ initiates a chemical chlorination of the nitride SNF and an anodic dissolution further increases the rate of dissolution of UN in the melt of LiCl-KCl.

The disadvantage of this method is that the anodic dissolution and the relatively low temperature enhance the formation of the sparingly soluble compound UNCl on the surface of the chlorinated nitride SNF. This results in a passivation phenomenon, a low degree of conversion of fuel, in additional operations of filtration and hydro-chemical dissolution of unreacted SNF, which considerably reduces the energy efficiency of the process.

The above-mentioned disadvantages of the known methods do not fully solve the problems associated with the development of energy-efficient and low-waste methods of carrying out technological operations within the framework of a closed nuclear fuel cycle.

It is an object of the present invention to provide an energy efficient method for reprocessing nitride SNF, suitable for incorporation into the scheme of a closed nuclear fuel cycle.

For this purpose, a method is proposed which, as the prior art, involves a chlorination of nitride spent nuclear fuel in a melt of a mixture of chlorides of alkali and/or alkaline-earth metals containing cadmium dichloride, the chlorination being carried out in a device for reprocessing nitride spent nuclear fuel using an inert gas atmosphere. The inventive method as set out in claim 1 differs from the prototype in that the chlorination is carried out in an apparatus having a heated zone in which a reactor with a chloride melt and a nitride spent nuclear fuel immersed therein is placed, as well as a cold zone placed under the reactor, that in the chlorination process the zone of the apparatus with the reactor is heated to a temperature above 700°C, the nitride spent nuclear fuel is kept in the melt up to full chlorination, wherein the cold zone of apparatus is used for the crystallization of the metallic cadmium formed in chlorination.

The essence of the claimed method according to claim 1 lies in the following. In the contact of nitride SNL (eg, nitride UN) with the chlorinating agent cadmium dichloride in the LiCl-KCl melt, exchange reactions will take place, for example:

$$UN + 1.5\ CdCl_2 = UCl_3 + 1.5\ Cd + N_2\ (g) \qquad (1)$$

$$UN + 0.5\ CdCl2 = 0.5\ UNC1 + 0.5Cd \qquad (2)$$

The LiCl-KCl melt serves as a solvent for both the starting $CdCl_2$ and the resulting $UCl_3$ (as well as other actinides).

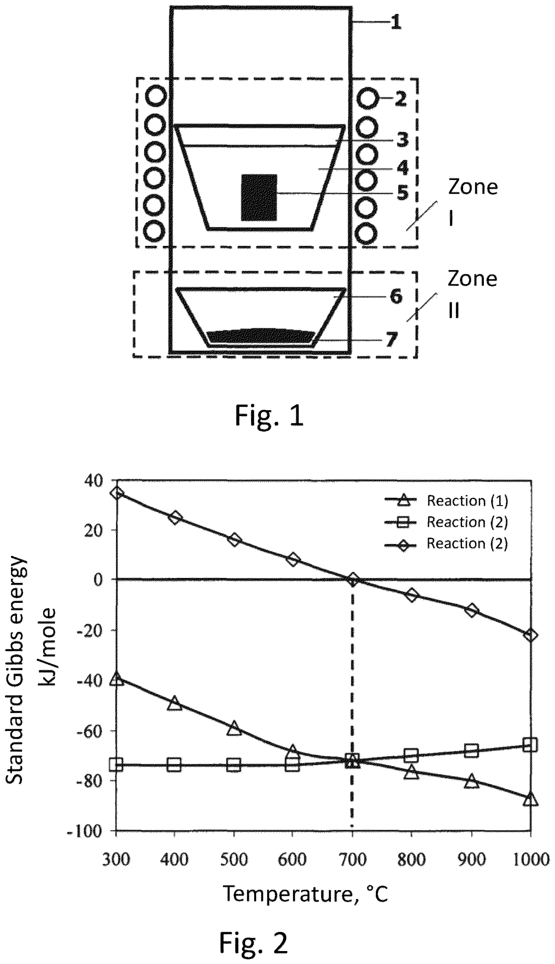

The data of a thermodynamic modeling, namely, negative values of the standard Gibbs energy (D (7°)) shown in FIG. 1 demonstrate that the reactions (1) and (2) proceed in parallel at any temperature, and thus the escape of a portion of the uranium into the insoluble phase of UNC1 seems unavoidable. However, the calculations also show (see FIG. 1) that at 700°C and above, the UNCl is dissolved in an excess of $CdCl_2$ according to the reaction (3):

$$UNCl + CdCl_2 = UCl_3 + Cd + 0.5\ N_2\ (r)\ (3)$$

This results in a melt containing $UCl_3$ without impurities in the form of UNC1 and other insoluble actinide compounds.

Thus, the basic chlorination product is a LiCl-KCl melt containing actinide chlorides and being used for further electrowinning of actinides on a solid or liquid cathode.

The method is carried out in an apparatus with an inert atmosphere, wherein the nitride SNF is immersed in a reactor with a chloride melt located in a zone of the apparatus, which is heated up to the chlorination temperature above 700°C. The chlorination temperature is recommended not to exceed 900°C, which has to do with a sharp increase of the vapor pressure of $CdCl_2$, the boiling point of which is 960°C. Increasing the temperature to above 950°C implies a greater consumption of $CdCl_2$ due to its evaporation, a reduction of the efficiency of the process and the need to trap $CdCl_2$ vapors in the chlorination apparatus.

A distinctive feature of the claimed method is the formation of metallic cadmium according to reactions (1) and (2), which at the temperature of the method is completely evaporated from the melt. In order to trap it the apparatus for reprocessing nitride SNF has a cold zone where formed cadmium is crystallized. Unlike the prior art, the claimed method does not require a primary anodic dissolution of nitride SNF, which enhances passivation phenomena on the surface of the reprocessed sample, and also does not require the presence of some content of $UCl_3$ in the initial melt.

The above description of the invention is provided for carrying out the process in a mixture of the chlorides LiCl-KCl as the most common melt for the pyrochemical reprocessing of SNF.

The technical result achieved by the claimed method consists in increasing the degree of conversion of the nitride SNF in the chloride melt to 100%, so that the necessity of additional stages of re-filtration and reprocessing is reduced or completely eliminated SNF.

The invention is illustrated by the drawings, in which:

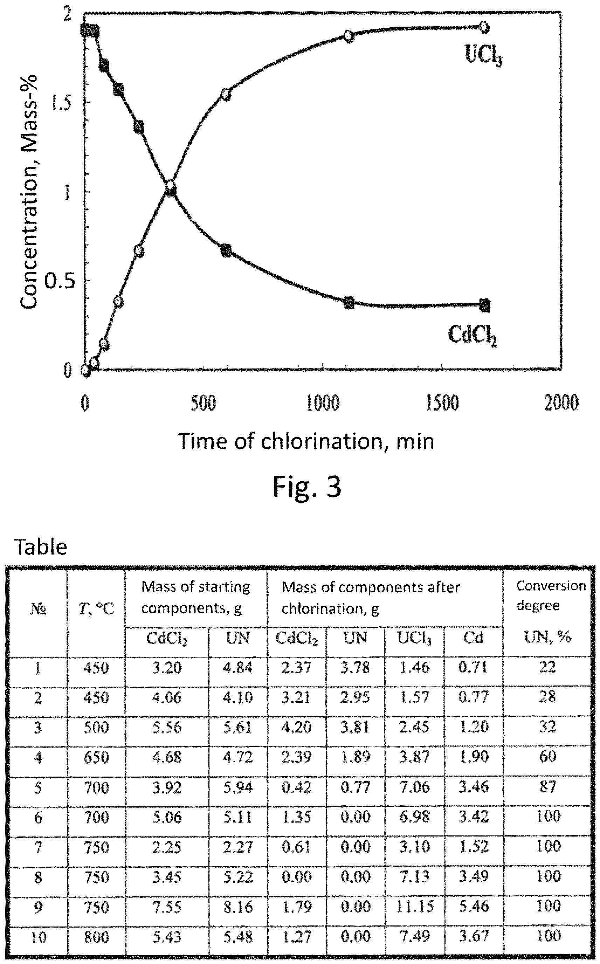

FIG. 1 is a schematic diagram of an apparatus for chlorinating an nitride SNF in accordance with the claimed method. FIG. 2 is a diagram for the thermodynamic reasons for conducting the process at a temperature above 700°C. FIG. 3 shows typical changes in the concentrations of $UCl_3$ and $CdCl_2$ in the LiCl-KCl melt when nitride SNF (UN nitride) is immersed in it.

The table shows parameters and results of the utilization of the prototype and the claimed method.

An experimental confirmation of the chlorination of nitride SNF according to the present method is carried out in a closed apparatus with an inert atmosphere, for which moisture free argon is used. The apparatus comprises a housing 1, heaters 2, a reactor 3, a chloride melt 4, a nitride spent nuclear fuel 5, a metal collector 6, cadmium 7. The apparatus has a heated zone I and a cold zone II.

In the heated zone of the apparatus, a reactor 3 in the form of a ceramic crucible made of the oxide MgO was placed, with a previously prepared mixture of the chlorides KCl, LiCl, $CdCl_2$. A eutectic mixture of LiCl-KCl was prepared by zonal recrystallization for a maximum removal of oxygen impurities and mixed with purified $CdCl_2$ in a "dry box". The zone of the apparatus with the reactor was heated to a temperature of 750°C, after which in the LiCl-KCl-$CdCl_2$ melt a UN nitride sample was immersed as the main component of the nitride SNF, and held in the melt until the reaction was complete according to the chemical analysis.

During the experiment, samples of the melt were taken through a special lock device to analyze the content of $CdCl_2$ and the resulting $UCl_3$. On the basis of the obtained data, the degree of conversion of the nitride UN to $UCl_3$ in the chlorination is calculated. The main parameters and the results of the experiments are given in the table, and the typical curves of the interdependence of the contents of $CdCl_2$ and $UCl_3$ in the melt of LiCl-KCl are shown in FIG. 3. In FIG.3 it can be seen that in the course of the chlorination the concentration of $CdCl_2$ in the LiCl-KCl melt is reduced, while the concentration of $UCl_3$ increases. This demonstrates the direct progress of reactions (1), (2) and (3). At the experimental temperature of 500 °C the metallic cadmium formed according to reactions (1) and (2) was concentrated at the bottom of the reactor, while at 750 °C cadmium was collected in a special metal collector (see FIG. 2). It can be seen from the table that at a temperature of 700°C and above the degree of conversion of the nitride SNF (UN nitride) is 100%, while at a lower temperature the conversion is only 20 to 60%.

For an industrial use, the apparatus must be designed so that the cold zone is under the reactor in which the chlorination is carried out. In a particular case, a metal collector in the form of a crucible is placed in this zone for crystallization of the metal cadmium formed during chlorination, which the vapors of cadmium are condensed. As a result, the reactor of the apparatus produces a LiCl-KCl melt containing actinide chlorides, as well as separately collected cadmium.

After the completion of the chlorination, the LiCl-KCl melt containing the actinide chlorides as well as cadmium is recovered from the apparatus and sent to the step of the electrowinning of actinides. In a particular embodiment, the electrowinning of actinides can be carried out directly in a reactor in which the chlorination is carried out.

Mixtures of chlorides of alkali and/or alkaline-earth metals (chlorides of lithium, potassium, sodium, cesium, calcium, magnesium, strontium, barium), which do not interact with nitride SNF, may be used to optimize technological parameters of the method as a chloride melt containing cadmium chloride.

Thus, the claimed method of reprocessing nitride spent nuclear fuel makes it possible to increase the degree of conversion of nitride SNF in a chloride melt to 100%, which reduces or completely eliminates the necessity of additional stages of repeated filtration and reprocessing of SNF.

## Claims

1. Method of reprocessing nitride spent nuclear fuel in salt melts, involving its chlorination in the melt of a mixture of chlorides of alkali and/or alkaline-earth metals containing cadmium dichloride, wherein the chlorination is carried out in an apparatus for reprocessing nitride spent nuclear fuel with the use of an inert gas atmosphere,
   **characterized in that** the chlorination is carried out in an apparatus having a heated zone (I) in which a reactor (3) with a LiCl-KCl melt (4) and a nitride spent nuclear fuel (5) immersed therein is located, as well as a cold zone (II) located below the reactor (3), wherein the LiCl-KCl melt (4) has been prepared by a zone melting method in order to remove oxygen impurities and mixed with purified $CdCl_2$, wherein in the course of the chlorination, the heated zone (I) of the apparatus with reactor (3) is heated up to a temperature higher than 700°C, the nitride spent nuclear fuel (5) is held being immersed into the LiCl-KCl-$CdCl_2$ melt to the point of complete chlorination, while the cold zone (II) of the apparatus is used for crystallizing the metallic cadmium formed during the chlorination

## Patentansprüche

1. Das Verfahren zur Aufbereitung abgebrannter Nitrid-Kernbrennstoffe in Salzschmelzen, das deren Chlorierung in der den Cadmiumdichlorid enthaltenden Schmelze der Mischung von Chloriden von Alkali- und/oder Erdalkalimetallen einschließt, dabei wird die Chlorierung in einer Vorrichtung zur Aufbereitung abgebrannter Nitrid-Kernbrennstoffe unter Verwendung einer Inertgasatmosphäre durchgeführt,

   **dadurch gekennzeichnet, dass** die Chlorierung in der Vorrichtung durchgeführt wird, umfassend eine beheizte Zone (I),
   in der der Reaktor (3) mit der Chloridschmelze (4) und dem darin eingetauchten abgebrannten Nitrid-Kernbrennstoff (5) angeordnet ist,
   sowie eine unter dem Reaktor (3) liegende kalte Zone (II), in der die Schmelze LiCl-KCl (4) durch das Zonenschmelzverfahren zwecks der Entfernung von Sauerstoffverunreinigungen bereitet und mit gereinigtem $CdCl_2$

gemischt ist, dabei wird während der Chlorierung die Zone (I) der Vorrichtung mit dem Reaktor (3) auf die Temperatur über 700 °C erhitzt, der abgebrannte Nitrid-Kernbrennstoff (5) wird in der Schmelze LiCl-KCl-CdCl$_2$ bis zur vollständigen Chlorierung gehalten, die kalte Zone (II) der Vorrichtung wird dabei zur Kristallisation von bei der Chlorierung entstehendem Metallcadmium verwendet.

**Revendications**

1. Procédé de retraitement de combustible nucléaire irradié dans des bains de fusion de sel qui comprend sa chloration dans un bain de fusion de chlorures de métaux alcalins et/ou alcalino-terreux contenant du dichlorure de cadmium, en cela la chloration est effectuée dans un appareil pour transformer un combustible nucléaire irradié nitruré en utilisant une atmosphère de gaz inerte,
**caractérisé en ce que** la chloration est effectuée dans un appareil qui a une zone chauffée (1) qui comprend un réacteur (3) doté d'une solution de chlorure (4) et un combustible nucléaire irradié nitruré (5) immergée dans celle-ci, ainsi qu'une zone froide (II) disposée sous le réacteur (3), dans lequel un bain de fusion LiCl-KCl (4) est préparé par la méthode de fusion de la zone pour éliminer les impuretés d'oxygène et mélangée avec le CdCl$_2$ purifié, en cela pendant la chloration, la zone (1) de l'appareil avec le réacteur (3) est chauffée à une température supérieure à 700°C, le combustible nucléaire irradié nitruré (5) est retenu dans un bain de fusion LiCl-KCl-CdCl$_2$ jusqu'à la chloration complète, et la zone froide (II) de l'appareil est utilisée pour cristalliser le cadmium métallique qui se forme lors de la chloration.

## Fig. 1

## Fig. 2

Fig. 3

Table

| № | $T$, °C | Mass of starting components, g | | Mass of components after chlorination, g | | | | Conversion degree |
|---|---|---|---|---|---|---|---|---|
| | | CdCl$_2$ | UN | CdCl$_2$ | UN | UCl$_3$ | Cd | UN, % |
| 1 | 450 | 3.20 | 4.84 | 2.37 | 3.78 | 1.46 | 0.71 | 22 |
| 2 | 450 | 4.06 | 4.10 | 3.21 | 2.95 | 1.57 | 0.77 | 28 |
| 3 | 500 | 5.56 | 5.61 | 4.20 | 3.81 | 2.45 | 1.20 | 32 |
| 4 | 650 | 4.68 | 4.72 | 2.39 | 1.89 | 3.87 | 1.90 | 60 |
| 5 | 700 | 3.92 | 5.94 | 0.42 | 0.77 | 7.06 | 3.46 | 87 |
| 6 | 700 | 5.06 | 5.11 | 1.35 | 0.00 | 6.98 | 3.42 | 100 |
| 7 | 750 | 2.25 | 2.27 | 0.61 | 0.00 | 3.10 | 1.52 | 100 |
| 8 | 750 | 3.45 | 5.22 | 0.00 | 0.00 | 7.13 | 3.49 | 100 |
| 9 | 750 | 7.55 | 8.16 | 1.79 | 0.00 | 11.15 | 5.46 | 100 |
| 10 | 800 | 5.43 | 5.48 | 1.27 | 0.00 | 7.49 | 3.67 | 100 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2524681 C2
- RU 2079909
- JP 2000284090 A
- FR 2750242
- RU 2603844

**Non-patent literature cited in the description**

- *Journal of Nuclear Materials,* 2005, vol. 344, 128-135